# FASCICULE DE BREVET EUROPEEN

(11) **EP 3 814 218 B1**
(45) Date de publication et mention de la délivrance du brevet: **07.06.2023**
(21) Numéro de dépôt: 19756421.4
(22) Date de dépôt: 03.07.2019
(51) Int. Cl.: B64C 25/62, B64C 25/34, B64C 25/58

(54) **TRAIN D'ATTERRISSAGE D'AVION PRESENTANT UN POIDS INFERIEUR A 5,7 TONNES**
FAHRWERK FÜR EIN FLUGZEUG, DAS WENIGER ALS 5,7 TONNEN WIEGT
LANDING GEAR FOR AN AIRCRAFT WEIGHING LESS THAN 5.7 TONNES

(30) Priorité: 12.07.2018 FR 1856454
(43) Date de publication de la demande: 05.05.2021
(73) Titulaire: Beringer Aero, 05130 Tallard (FR)
(72) Inventeur: BERINGER, Gilbert, FOUILLOUSE 05130 (FR)
(74) Mandataire: Cabinet Laurent & Charras
(86) Numéro de dépôt international: PCT/FR2019/051652
(87) Numéro de publication internationale: WO 2020/012093

(56) Documents cités:
- FR-A- 634 725
- US-A- 1 600 154
- US-A- 2 218 370
- US-A- 2 597 265
- US-A1- 2017 217 574

## Description

### DOMAINE TECHNIQUE

L'invention se rattache au secteur technique de l'aviation générale, c'est-à-dire par exemple des avions de type ULM, ou plus généralement des avions présentant un poids inférieur à 5,7 tonnes. Plus particulièrement, l'invention se rattache à un train d'atterrissage pour ce type d'avion.

### ART ANTERIEUR

Il est connu de l'art antérieur un train d'atterrissage pour avion du domaine de l'aviation générale, se présentant sous la forme d'un train à lame. En d'autres termes, le train d'atterrissage est constitué d'au moins une roue fixée à un châssis ou à un fuselage de l'avion par l'intermédiaire d'un élément de liaison se présentant sous la forme d'une lame flexible et amortissante.

Bien que ce train à lame confère une certaine propriété amortissante, celle-ci n'est pas satisfaisante.

Il existe d'autres types de trains d'atterrissage, notamment un train d'atterrissage du type constitué par un élément de liaison tubulaire, s'étendant à partir du fuselage de manière inclinée, ou de manière verticale, et fixé directement à la roue. Ce type de train d'atterrissage ne présente aucune capacité d'amortissement.

Il est également connu, par exemple du document US2233191, un train d'atterrissage pour un avion de l'aviation générale, comportant un renfort tubulaire fixe de forme générale triangulaire dont le sommet est dirigé vers le bas, et un renfort vertical plan à l'extrémité inférieure duquel est fixé une platine, sous le sommet du renfort tubulaire. Les extrémités de la base du renfort tubulaire et la platine fixée au renfort plan sont accouplés, avec capacité d'articulation, à un système de suspension relié aux roues. Chaque extrémité de la base du renfort tubulaire est accouplée angulairement à une roue au moyen d'un organe amortisseur, tandis que la platine fixée au renfort plan est reliée à chaque roue par une barre de torsion relativement fine.

Le document US2218370A divulgue un avion muni d'un train d'atterrissage à ressort pour l'absorption des chocs lors de l'atterrissage de l'avion.

Cette structure permet de réaliser un amortissement satisfaisant, mais est relativement complexe dans sa mise en oeuvre.

Il est également connu des trains d'atterrissage avec système amortisseur à compas selon cette technique, l'élément de liaison au châssis est relié à un cylindre amortisseur, lui-même relié à la roue, et un système de compas, c'est-à-dire un système de deux bras articulés l'un par rapport à l'autre, dont l'un est relié à la roue et dont l'autre est relié au fût du cylindre amortisseur.

Ce dispositif donne entière satisfaction en termes d'amortissement, mais nécessite l'agencement complexe du compas, notamment pour le guidage de la roue en rotation autour d'un axe vertical.

### EXPOSE DE L'INVENTION

L'un des buts de l'invention est donc de proposer un train d'atterrissage d'avion léger, c'est-à-dire d'avion considéré dans le domaine de l'aviation générale, notamment d'un poids inférieur à 5,7 tonnes, dont la conception est simple, sûre et rationnelle, qui soit équipé d'un système d'amortisseur satisfaisant, tout en permettant de pouvoir guider, d'une manière tout aussi simple, la rotation de la roue autour d'un axe vertical.

À cet effet, il a été mis au point un train atterrissage d'avion léger, c'est-à-dire d'un poids inférieur à 5,7 tonnes, constitué d'au moins une roue fixée à un châssis ou à un fuselage de l'avion par l'intermédiaire d'un élément de liaison.

Selon l'invention, la roue est reliée à l'élément de liaison par l'intermédiaire d'un système de deux cylindres amortisseurs disposé entre la roue et l'élément de liaison.

De cette manière, l'invention permet de fournir un train d'atterrissage équipé d'une fonction amortissante optimale. Par ailleurs, le fait que la roue soit reliée à l'élément de liaison directement et uniquement par l'intermédiaire du système de deux cylindres amortisseurs, permet de simplifier la conception du train atterrissage, et permet d'assurer facilement le guidage en rotation de la roue autour d'un axe vertical, puisque le système comprend deux cylindres amortisseurs.

Selon une forme de réalisation particulière, le système de deux cylindres amortisseurs est composé de deux tiges s'étendant depuis une pièce support fixée à une fusée de la roue, et de deux fûts montés avec capacité de coulissement amorti autour des tiges et solidarisés à l'élément de liaison.

De préférence, les deux tubes du système de cylindres amortisseur sont solidarisés à l'élément de liaison par l'intermédiaire d'une pièce de liaison fixée à l'élément de liaison et reliant entre eux les deux fûts.

L'invention s'applique à tout type de train d'atterrissage constitué d'au moins une roue fixée au châssis ou au fuselage de l'avion par un élément de liaison. Par exemple, l'élément de liaison peut-être sous la forme d'une lame, notamment pour les trains d'atterrissage à lame, ou bien sous la forme d'un tube qui peut par exemple être fixé à l'avion verticalement ou bien de manière inclinée.

Lorsque l'élément de liaison se présente sous la forme d'une lame, la pièce de liaison comprend une platine de fixation à la lame, située entre les fûts du système de cylindres amortisseurs, laquelle platine est fixée sur des perçages que présente originellement la lame et qui étaient prévus pour se fixer sur la fusée de la roue.

Ainsi, il est donc possible d'équiper les trains d'atterrissage à lame de l'état de la technique avec un système de deux cylindres amortisseurs pour obtenir un train d'atterrissage selon l'invention.

Selon une forme de réalisation particulière, la pièce support se présente sous la forme d'une fourche avec deux branches venant se fixer de part et d'autre de la roue, reliées par une entretoise depuis laquelle s'étendent les deux tiges

Par ailleurs, et pour faciliter davantage l'adaptation aux trains d'atterrissage existants, la pièce support comprend une platine de fixation à la fusée de la roue, située entre les tiges, et qui est fixée sur des perçages que présente originellement la fusée et qui étaient prévus pour se fixer sur l'élément de liaison.

Les cylindres amortisseurs sont de tous types appropriés, et peuvent être par exemple des cylindres à ressort, pneumatiques, ou hydrauliques.

Selon une forme de réalisation particulière, la pièce support est fixée par pincement et boulonnage aux tiges du système de deux cylindres amortisseurs.

### DESCRIPTION SOMMAIRE DES FIGURES

D'autres avantages et caractéristiques techniques de l'invention ressortiront mieux de la description qui va suivre d'une forme de réalisation préférée du train d'atterrissage, donné à titre d'exemple non limitatif à partir des figures annexées dans lesquelles :
- la figure 1 est une vue partielle et en perspective d'une première forme de réalisation d'un train d'atterrissage selon l'invention, illustrant un système de deux cylindres amortisseurs disposé entre une roue et un élément de liaison au châssis d'un avion sous la forme d'une lame, le système étant en position détendue ;
- la figure 2 est une vue similaire à celle de la figure 1, le système de deux cylindres amortisseurs étant en position comprimée ;
- la figure 3 est une vue similaire à celle de la figure 2, sans la roue, laissant place à la fusée de la roue ;
- la figure 4 est une vue similaire à celle de la figure 1, sans la roue, ni la fusée ;
- la figure 5 est une vue partielle et en perspective d'une seconde forme de réalisation d'un train d'atterrissage selon l'invention, illustrant un système de deux cylindres amortisseurs disposé entre une roue et un élément de liaison au châssis d'un avion sous la forme d'un tube incliné, le système étant en position comprimée ;
- la figure 6 est une vue partielle et en perspective d'une troisième forme de réalisation d'un train d'atterrissage selon l'invention, illustrant un système de deux cylindres amortisseurs disposé entre une roue et un élément de liaison au châssis d'un avion sous la forme d'un tube vertical, le système étant en position détendue ;
- la figure 7 est une vue similaire à celle de la figure 6, le système de deux cylindres amortisseurs étant en position comprimée ;
- la figure 8 est une vue partielle et en perspective d'une forme de réalisation d'un train d'atterrissage qui n'est pas couverte par les revendications, illustrant un système de deux cylindres amortisseurs monté sur une fourche et disposé entre une roue et un élément de liaison au châssis d'un avion sous la forme d'un tube vertical, le système étant en position détendue ;
- la figure 9 est une vue similaire à celle de la figure 8, le système de deux cylindres amortisseurs étant en position comprimée.

### DESCRIPTION DETAILLEE DE L'INVENTION

L'invention concerne un train d'atterrissage (1) pour avion léger, c'est-à-dire pour un avion considéré dans la catégorie de l'aviation générale, présentant notamment un poids inférieur à 5,7 tonnes.

D'une manière générale, le train d'atterrissage (1) comprend un élément de liaison (2) reliant une roue (3) au châssis ou au fuselage de l'avion. Le train d'atterrissage (1) selon l'invention s'adapte aussi bien pour la roue (3) avant de l'avion, que pour les deuxroues (3) arrière.

De ce qui précède, selon des formes de réalisation particulières, l'élément de liaison (2) peut se présenter sous la forme d'une lame (2a) flexible, ou bien d'un élément tubulaire (2b), reliant la roue (3) verticalement ou de manière inclinée au châssis ou au fuselage de l'avion.

Selon l'invention, la roue (3) du train d'atterrissage (1) est reliée à l'élément de liaison (2) par l'intermédiaire d'un système (4) de deux cylindres amortisseurs disposé entre la roue (3) et l'élément de liaison (2). En d'autres termes, c'est le système (4) de deux cylindres amortisseurs qui réalise la liaison structurelle et mécanique entre la roue (3) et l'élément de liaison (2) au châssis. Les propriétés d'amortissement sont donc optimales.

D'une manière connue, la roue (3) du train d'atterrissage (1) comprend un pneu, une jante, un étrier, et une fusée (3a) formant l'axe de rotation de la roue (3).

A partir du principe de base de l'invention, plusieurs formes de réalisation peuvent être envisagées.

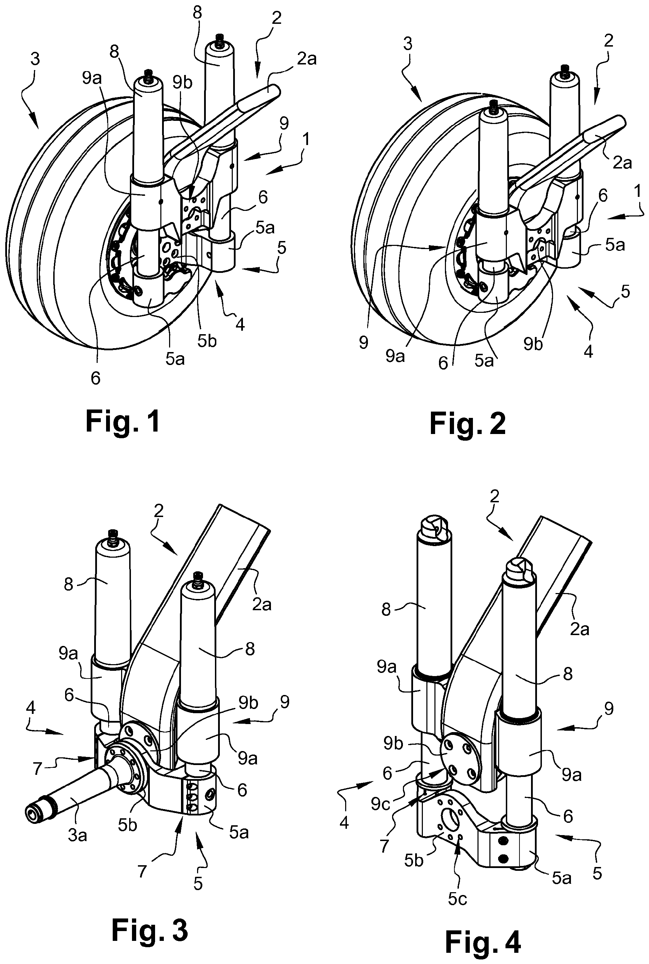

Selon une première forme de réalisation particulière illustrant un train à lame (2a), et en référence aux figures 1 à 4, le système (4) de deux cylindres amortisseurs comprend une pièce support (5) fixée sur un côté de la fusée (3a) de la roue (3).

Selon cette première forme de réalisation, la pièce support (5) comprend deux manchons d'extrémité (5a), parallèles l'un à l'autre, et reliés par une platine de fixation (5b) à la fusée (3a). Les deux manchons d'extrémité (5a) reçoivent chacun une tige (6) du système (4) de deux cylindres amortisseurs, et se fixent à ces dernières par pincement et boulonnage. A cet effet, chaque manchon (5a) présente une fente radiale (7) pour permettre le serrage et le pincement des tiges (6). Les deux tiges (6) sont donc éloignées l'une de l'autre, et reçoivent, avec capacité de coulissement amorti, des fûts (8) constituant également le système (4) de deux cylindres amortisseurs. Les fûts (8) sont reliés l'un à l'autre par une pièce de liaison (9) fixée à la lame (2a) constituant l'élément de liaison (2) au châssis de l'avion.

Par ailleurs et en référence à la figure 4, et de préférence, la platine de fixation (5b) de la pièce support (5) présente des perçages (Sc) destinés à venir coopérer avec des perçages que présente originellement la fusée (3a) pour se fixer à l'élément de liaison (2). Ainsi, la platine de fixation (5b) de la pièce support (5) se fixe directement sur la fusée (3a), sans nécessiter de modification.

De la même manière que pour la pièce support (5), la pièce de liaison (9) comprend deux manchons d'extrémité (9a), parallèles l'un à l'autre, et reliés par une platine de fixation (9b) à la lame (2a). Les manchons (9a) reçoivent les fûts (8) des cylindres amortisseurs, et la platine (9b) comprend des perçages (9c) destinés à coopérer avec des perçages que présente originellement la lame (2a) pour venir se fixer sur la fusée (3a) de la roue (3). Ainsi, la pièce de liaison (9) se fixe directement sur la lame (2a), sans nécessiter de modification de la lame (2a).

Ainsi, l'invention permet de relier, d'une manière simple et avec capacité d'amortissement optimale, la roue (3) d'un avion à l'élément de liaison (2) au châssis ou au fuselage de l'avion. Par ailleurs, le système (4) de deux cylindres amortisseurs permet également de guider en rotation la roue (3) autour d'un axe vertical.

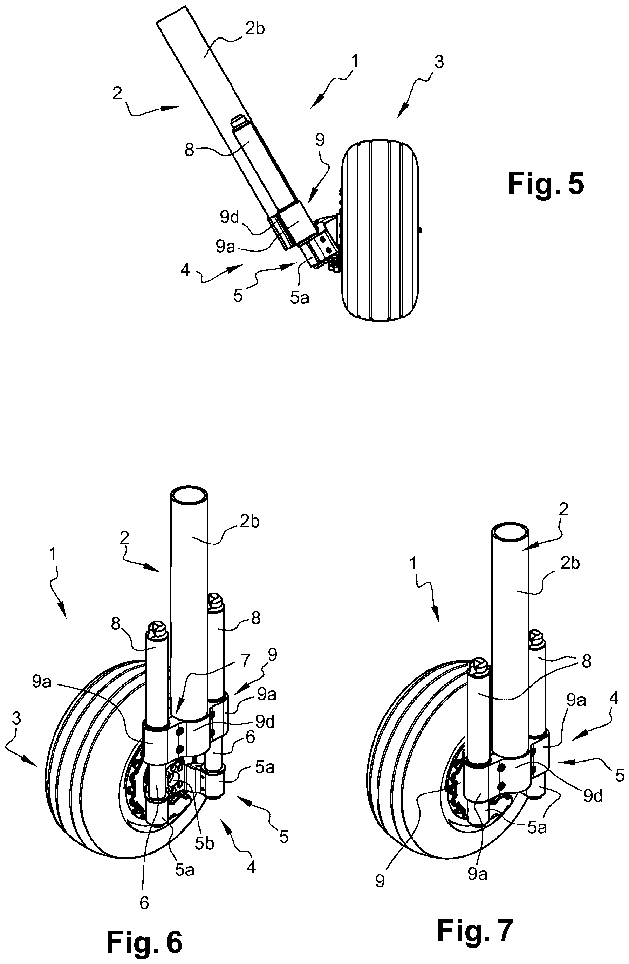

Dans le cas où l'élément de liaison (2) se présente sous la forme d'un tube (2b) incliné selon une deuxième forme de réalisation telle qu'illustrée à la figure 5, ou d'un tube (2b) vertical selon une troisième forme de réalisation telle qu'illustrée aux figures 6 et 7, la pièce de liaison (9) présente, en lieu et place de la platine (9b), un manchon central (9d), parallèle aux manchons d'extrémité (5a), et destiné à venir s'emmancher autour du tube (2b) et se fixer à celui-ci, par exemple par pincement et boulonnage, en combinaison avec au moins une fente radiale (7) ménagée dans le manchon central (9d). La pièce de liaison (9) se fixe donc aisément aux tubes (2b) de trains d'atterrissage existants. Le tube (2b) constituant l'élément de liaison (2) peut être réalisé en carbone.

De préférence, la pièce de liaison (9) se fixe également aux fûts (8) des cylindres amortisseurs par pincement et boulonnage, en combinaison avec des fentes radiales (7) ménagées aussi dans les manchons d'extrémité (5a), par exemple communicantes avec celles du manchon central (9d).

Bien entendu, il est évident que d'autres moyens de fixation de la pièce de liaison (9) ou de la pièce support (5) peuvent être envisagés sans sortir du cadre de l'invention.

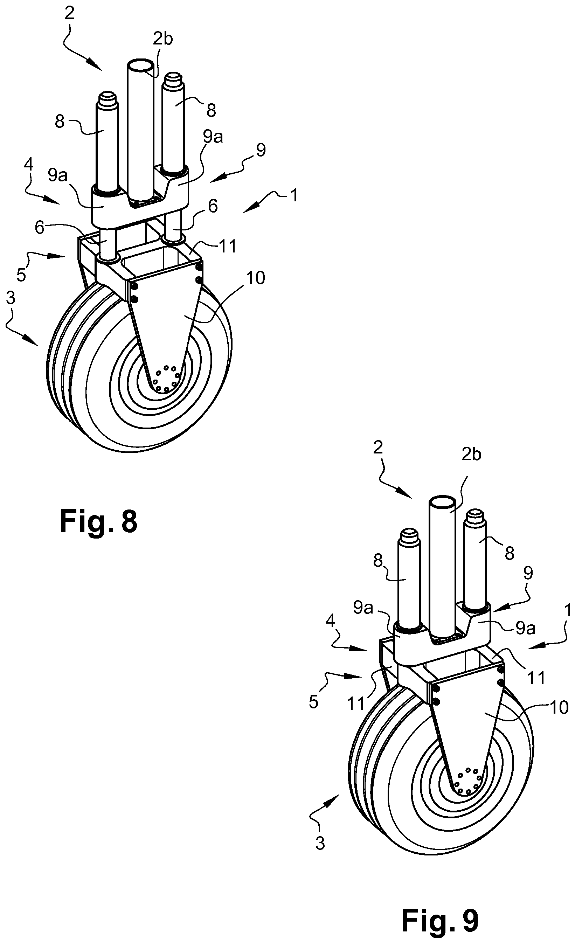

En référence aux figures 8 et 9, une forme de réalisation a été envisagée qui n'est pas couverte par les revendications. Dans cette forme de réalisation, la pièce support (5) se présente sous la forme d'une fourche avec deux branches (10) venant se fixer à la fusée (3a), de part et d'autre de la roue (3). Les branches (10) sont reliées par une entretoise (11) depuis laquelle s'étendent les deux tiges (6) du système (4) de deux cylindres amortisseurs, par exemple reçues dans des manchons du même type que les manchons (5a) décrits ci-avant.

Dans cette forme de réalisation, la pièce de liaison (9) ne présente pas de manchon central (9d), le tube constituant l'élément de liaison (2) s'étend directement de la pièce de liaison (9) et est fixée à celle-ci par l'intermédiaire de vis de fixation par exemple. Bien entendu, cette forme de réalisation peut être transposée sur les formes de réalisation des figures 5 à 7 mettant en oeuvre un tube (2d) en tant qu'élément de liaison (2). Inversement, la forme de réalisation de la pièce de liaison (9) avec le manchon central (9d) peut être transposée sur la forme de réalisation des figures 8 et 9.

Il ressort de ce qui précède que l'invention fournit bien un train d'atterrissage (1) équipé d'un système (4) d'amortisseur, notamment disposé entre la roue (3) et l'élément de liaison (2), qui est de conception simple, et qui permet de guider en rotation autour d'un axe vertical la roue (3) du train d'atterrissage (1).

L'invention permet ainsi de dissocier les fonctions de résistance, de celles du guidage et de la répartition de la charge.

## Revendications

1. Train d'atterrissage (1) d'avion léger, c'est-à-dire d'un poids inférieur à 5,7 tonnes, le train étant constitué d'au moins une roue (3) fixée à un châssis ou à un fuselage de l'avion par l'intermédiaire d'un élément de liaison (2), la roue (3) étant reliée à l'élément de liaison (2) par l'intermédiaire d'un système (4) de deux cylindres amortisseurs disposé entre la roue (3) et l'élément de liaison (2), ledit système (4) de deux cylindres amortisseurs étant composé de deux tiges (6) s'étendant depuis une pièce support (5), et de deux fûts (8) montés avec capacité de coulissement amorti autour des tiges (6) et solidarisés à l'élément de liaison (2), **caractérisé en ce que** la pièce de support (5) est fixée à une fusée (3a) de la roue (3), et **en ce que** les deux fûts (8) du système (4) de deux cylindres amortisseurs sont solidarisés à l'élément de liaison (2) par l'intermédiaire d'une pièce de liaison (9) fixée à l'élément de liaison (2) et reliant entre eux les deux fûts (8).

2. Train d'atterrissage (1) selon la revendication 1, ***caractérisé* en ce que** l'élément de liaison (2) se présente sous la forme d'une lame (2a).

3. Train d'atterrissage (1) selon les revendications 1 et 2, ***caractérisé* en ce que** la pièce de liaison (9) comprend une platine de fixation (9b) à la lame (2a), située entre les fûts (8), et qui est fixée sur des perçages que présente originellement la lame (2a) pour se fixer sur la fusée (3a) de la roue (3).

4. Train d'atterrissage (1) selon la revendication 1, ***caractérisé* en ce que** la pièce support (5) comprend une platine de fixation (5b) à la fusée (3a) de la roue (3), située entre les tiges (6), et qui est fixée sur des perçages que présente originellement la fusée (3a) pour se fixer sur l'élément de liaison (2).

5. Train d'atterrissage (1) selon l'une des revendications précédentes, ***caractérisé* en ce que** l'élément de liaison (2) est un tube (2d).

6. Train d'atterrissage (1) selon l'une des revendications précédentes, ***caractérisé* en ce que** les cylindres du système (4) de deux cylindres amortisseurs sont des cylindres à ressort, pneumatiques, ou hydrauliques.

7. Train d'atterrissage (1) selon la revendication 1, ***caractérisé* en ce que** la pièce support (5) est fixée par pincement et boulonnage aux tiges (6) du système (4) de deux cylindres amortisseurs.

## Patentansprüche

1. Fahrwerk (1) für ein Leichtflugzeug, d.h. mit einem Gewicht von weniger als 5,7 Tonnen, wobei das Fahrwerk aus mindestens einem Rad (3) besteht, das über ein Verbindungselement (2) an einem Fahrgestell oder einem Rumpf des Flugzeugs befestigt ist, **dadurch gekennzeichnet, dass** das Rad (3) mit dem Verbindungselement (2) über ein System (4) aus zwei Dämpfungszylindern verbunden ist, das zwischen dem Rad (3) und dem Verbindungselement (2) angeordnet ist, wobei das System (4) aus zwei Dämpfungszylindern aus zwei Stangen (6) besteht, die sich von einem Trägerteil (5) aus erstrecken, das an einem Achsschenkel (3a) des Rads (3) befestigt ist, und aus zwei Fässern (8), die mit gedämpfter Gleitfähigkeit um die Stangen (6) herum montiert und mit dem Verbindungselement (2) fest verbunden sind, und dass die beiden Fässer (8) des Systems (4) aus zwei Dämpfungszylindern mit dem Verbindungselement (2) über ein Verbindungsstück (9) fest verbunden sind, das an dem Verbindungselement (2) befestigt ist und die beiden Fässer (8) miteinander verbindet.

2. Fahrwerk (1) nach Anspruch 1, **dadurch gekennzeichnet, dass** das Verbindungselement (2) in Form einer Klinge (2a) vorliegt.

3. Fahrwerk (1) nach Anspruch 1 und 2, **dadurch gekennzeichnet, dass** das Verbindungsstück (9) eine Platine (9b) zur Befestigung am Klinge (2a) umfasst, die sich zwischen den Fässern (8) befindet und die an Bohrungen befestigt ist, die das Klinge (2a) ursprünglich aufweist, um am Achsschenkel (3a) des Rades (3) befestigt zu werden.

4. Fahrwerk (1) nach Anspruch 1, **dadurch gekennzeichnet, dass** das Trägerteil (5) eine Platine (5b) zur Befestigung am Achsschenkel (3a) des Rades (3) umfasst, die sich zwischen den Stangen (6) befindet und die an Bohrungen befestigt ist, die der Achsschenkel (3a) ursprünglich aufweist, um sich am Verbindungselement (2) zu befestigen.

5. Fahrwerk (1) nach einem der vorhergehenden Ansprüche, **dadurch gekennzeichnet, dass** das Verbindungselement (2) ein Rohr (2d) ist.

6. Fahrwerk (1) nach einem der vorhergehenden Ansprüche, **dadurch gekennzeichnet, dass** die Zylinder des Systems (4) aus zwei Dämpfungszylindern Feder-, Pneumatik-, oder Hydraulikzylinder sind.

7. Fahrwerk (1) nach Anspruch 2, **dadurch gekennzeichnet, dass** das Trägerteil (5) durch Crimpen und Schrauben an den Stangen (6) des Systems (4) aus zwei Dämpfungszylindern befestigt ist.

## Claims

1. Landing gear (1) of a light aircraft, i.e. weighing less than 5.7 tonnes, the landing gear consisting of at least one wheel (3) attached to a chassis or to a fuselage of the aircraft by means of a connecting element (2), the wheel (3) being connected to the connecting element (2) via a system (4) of two damping cylinders arranged between the wheel (3) and the connecting element (2), said system (4) of two damping cylinders being composed of two rods (6) extending from a support part (5) and of two struts (8) mounted with the ability for damped sliding around the rods (6) and secured to the connecting element (2), **characterized in that** the support part (5) is attached to an axle (3a) of the wheel (3), and **in that** the two struts (8) of the system (4) of two damping cylinders are secured to the connecting element (2) via a connecting part (9) attached to the connecting element (2) and connecting the two struts (8) to one another.

2. Landing gear (1) according to claim 1, ***characterized* in that** the connecting element (2) is in the form of a strip (2a).

3. Landing gear (1) according to claims 1 and 2, ***characterized* in that** the connecting part (9) comprises a mounting plate (9b) for attachment to the strip (2a), located between the struts (8), and which is attached to holes that the strip (2a) originally has for attaching to the axle (3a) of the wheel (3).

4. Landing gear (1) according to claim 1, ***characterized* in that** the support part (5) comprises a mounting plate (5b) for attachment to the axle (3a) of the wheel (3), located between the rods (6), and which is attached to holes that the axle (3a) originally has for attaching to the connecting element (2).

5. The landing gear (1) according to one of the preceding claims, ***characterized* in that** the connecting element (2) is a tube (2d).

6. The landing gear (1) according to one of the preceding claims, ***characterized* in that** the cylinders of the system (4) of two damping cylinders are spring, pneumatic or hydraulic cylinders.

7. The landing gear (1) according to claim 2, ***characterized* in that** the support part (5) is attached by crimping and bolting to the rods (6) of the system (4) of two damping cylinders.
